Europäisches Patentamt

**European Patent Office**

**Office européen des brevets**

(19)

(11) Veröffentlichungsnummer: **0 064 216**
**A2**

(12) **EUROPÄISCHE PATENTANMELDUNG**

(21) Anmeldenummer: **82103311.5**

(22) Anmeldetag: **20.04.82**

(51) Int. Cl.³: **G 01 L 5/10**
**G 01 N 27/72**

(30) Priorität: **29.04.81 HU 110781**

(43) Veröffentlichungstag der Anmeldung:
**10.11.82 Patentblatt 82/45**

(84) Benannte Vertragsstaaten:
**AT BE DE FR GB LU NL SE**

(71) Anmelder: **Magyar Tudományos Akadémia Müszaki**
**Fizikai Kutato Intézet**
**Foti ut 56.**
**Budapest iV(HU)**

(71) Anmelder: **Dunai Vasmü**

**Dunaujváros(HU)**

(72) Erfinder: **Ivanov, Peter**
**Munkásotthon u. 43.**
**H-1043 Budapest(HU)**

(72) Erfinder: **Gráner, János**
**Berda József u.50.**
**H-1045 Budapest(HU)**

(72) Erfinder: **Gaál, István, Dr.**
**Pagony u.4.**
**H-1124 Budapest(HU)**

(72) Erfinder: **Tóbiás, Ferenc**
**Kazinczy u.5.**
**H-1075 Budapest(HU)**

(72) Erfinder: **Takó, József**
**Mildenberger u.18.**
**H-1047 Budapest(HU)**

(72) Erfinder: **Mánya, Gábor**
**Telkes u.8.**
**H-1046 Budapest(HU)**

(72) Erfinder: **Friedrich, Ferenc**
**Vasmü u.61.**
**H-2400 Dunaujváros(HU)**

(72) Erfinder: **Zsámbók, Dénes**
**Kisdobos u.3.**
**H-2400 Dunaujváros(HU)**

(72) Erfinder: **Králik, Gyula**
**Beloianisz u.1.**
**H-2400 Dunaujváros(HU)**

(74) Vertreter: **Lehn, Werner, Dipl.-Ing. et al,**
**Hoffmann, Eitle & Partner Patentanwälte**
**Arabellastrasse 4 (Sternhaus)**
**D-8000 München 81(DE)**

(54) **Messgerät und Messvorrichtung zur kontaktlosen Messung des mechanischen Spannungszustandes eines ferromagnetischen Blechs.**

(57) Die Erfindung betrifft ein Meßgerät und eine mehrere Meßgeräte enthaltende Meßvorrichtung zur kontaktlosen Messung des mechanischem Spannungszustandes eines ferromagnetischen Blechs. Das Meßgerät weist eine im ferromagnetischen Blech in einer erster Richtung ein wechselndes Magnetfeld erzeugende Erregungseinheit (60) und eine die mechanische Spannung des ferromagnetischen Blechs erfassende, ein in einer zur ersten in wesentlichen senkrechten zweiten Richtung hervorgerufenes magnetisches Wechselfeld messende Erfassungseinheit (61) auf, wobei die Erregungseinheit (60) einen ersten und einen zweiten Magnetkern aufweist, die zueinander parallel und spiegelsymmetrisch angeordnet sowie mit zumindest je einer Erregerwicklung (23, 25; 27, 29) versehen sind, die Erfassungseinheit (61) einen dritten Magnetkern aufweist, der im wesentlichen senkrecht und symmetrisch zu einer zwischen den ersten und zweiten Magnetkernen verlaufenden Symmetrielinie angeordnet ist, und mit einer Erfassungswicklung (31, 33) ausgestattet ist. Bei der Vorrichtung sind die Erregungseinheiten (60) der nebeneinander angeordneten Meßgeräte auf Generatoren (37) verschiedener Frequenzen geschaltet. Das erfindungsgemäße Meßgerät und die Meßvorrichtung sichern zur magnetischen Messung der mechanischen Spannung ein homogenes Magnetfeld und derart die Möglichkeit der Messung der sichtbaren und versteckten Planheitsfehler.

./...

Fig.9

# MESSGERÄT UND MESSVORRICHTUNG ZUR KONTAKTLOSEN MESSUNG DES MECHANISCHEN SPANNUNGSZUSTANDES EINES FERROMAGNETISCHEN BLECHS

Die Erfindung betrifft ein Meßgerät und eine mit zumindest zwei vorgeschlagenen Meßgeräten versehene Meßvorrichtung, wobei das Meßgerät eine im ferromagnetischen Blech in einer ersten Richtung ein wechselndes Magnetfeld erzeugende Erregungseinheit und eine die mechanische Spannung des ferromagnetischen Blechs erfassende und durch die Messung eines magnetischen Wechselfeldes wirkende Erfassungseinheit aufweist, wobei das magnetische Wechselfeld in einer zur ersten senkrechten oder beinahe senkrechten Richtung hervorgerufen ist. Die erfindungsgemäßen Lösungen sind insbesondere beim Kaltwalzen anwendbar und dienen zur kontinuierlichen und kontaktlosen Messung der Planheitsfehler der ferromagnetischen Platten in einer Ebene, sowie sichern elektrische Signale, die zur manuellen oder automati-

schen Regelung der Planheit der Bleche beim Kaltwalzen geeignet sind.

Der Arbeit der erfindungsgemäßen Vorrichtung liegen an sich bekannte Prinzipien zugrunde, und zwar die bekannte Erkenntnis, daß die "Formpermeabilität" eines ferromagnetischen Blechs (d. h. die zur gegebenen gewalzten Gestalt gehörende Permeabilität) höher ist, als die Permeabilität des Vakuums (der Luft), und weiters, daß die ferromagnetischen Körper unter Einwirkung von elastischen Spannungen ihre magnetischen Eigenschaften verändern (darin besteht der sog. magnetoelastische Effekt).

Die Planheitsfehler der Bleche (ihre Abweichung von der ebenen Fläche) entstehen während des Kaltwalzens. Ihnen liegt die Tatsache zugrunde, daß die Bleche während der Bearbeitung in Querrichtung veränderlicher plastischer Verformung untergebracht werden. Die in Querrichtung veränderliche plastische Verformung fürht zu zwei qualitativ verschiedenen Erscheinungsformen, und zwar zu den sichtbaren und der versteckten unsichtbaren, Planheitsfehlern. Die sichtbaren Planheitsfehler bilden solche, durch die Veränderung der Verformung hervorgerufene Wellenformationen, die, unter Anwendung einer geometrischen Definition, unentwickelbare Flächen bilden, d.h. berührt sich die Fläche z. B. mit einer Tischebene in Punkten oder in Bereichen, die mit Kurven begrenzt sind. Die meist charakteristischen Abarten der mit solchen Fehlern hergestellten Bleche können als Mittelwellenbleche und Randwellenbleche genannt werden.

Unter den versteckten Planheitsfehlern sind allgemein die Eigenspannungen (zurückbleibenden remanenten mechanischen Spannungen) zu verstehen, die im allgemeinen zu sichtbaren Planheitsfehlern führen, wenn die äußeren Spannungskräfte, die auf das Blech bewirken, erlöscht werden (falls das Blech bei Anwendung einer äußeren Spannungskraft gewälzt wird), oder wenn das Blech zerstückt wird. Im allgemeinen sind im Blech sowohl die sichtbaren, als auch die versteckten Planheitsfehler vorhanden.

Sehr oft tritt dieser Fall auch während des Kaltwalzens auf, daher auch bei der Anwendung einer äußeren Ziehkraft. Daraus folgt, daß ein richtig wirkendes, zur Verminderung der Planheitsfehler vorgesehene Meß- und Steuervorrichtung solche Signale leisten soll, die zur gleichzeitigen Steuerung der Arbeit zur Beseitigung sowohl der sichtbaren, als auch der versteckten Planheitsfehler geeignet sind.

Die bekannten Meß- und Reguliersysteme der Planheit erfüllen die obige Erforderung nicht, d.h., sie sind nicht zur gleichzeitigen Bestimmung der sichtbaren und versteckten Planheitsfehler geeignet.

Die die sichtbaren und/oder versteckten Planheitsfehler unter Berührung messenden Vorrichtungen (siehe z.B. die US-A- 3 499 306, US-A- 3 324 695 und US-A- 3 481 194) weisen den gemeinsamen Nachteil auf, daß die Steife des Blechs die Meßergebnisse in bedeutendem Maße beeinflußt, es ist die Gefahr der Kratzung der Oberfläche vorhanden, und die Vorrichtung ist sehr empfindlich gegen die Wirkung der Verschmutzungen, der ungleichmäßigen Abnutzung sowie gegen die Erschütterungen des Walzenständers. Infolge der Obigen ist die Anwendung dieser Methoden, insbesondere bei den Stahlwalzwerken, erschwert.

Die die Planheitsfehler ohne Berührung messenden Vorrichtungen sind in mehreren Abarten bekannt. Eine ihrer Gruppen stützt sich auf der Methode der Spiegelung. Das Wesen dieser

- 4 -                    0064216

Methode besteht in Beobachtung des Bildes eines Lichtstrahls nach der Spiegelung auf der Oberfläche des Blechs, die als Spiegelfläche wirkt. Diese optische Methode erlaubt es nicht, alle sichtbaren Planheitsfehler zu bestimmten (z.B. ist es unmöglich, die sog. Kanalform, d.h. die in Querrichtung des Blechs vorhandene Krümmung zu entdecken), und weiters sind viele Möglichkeiten des Irrtums wegen der Ungleichmäßigkeit und Fehler der Blechenoberfläche sowie wegen der Schütterung des weitergeleiteten Blechs vorhanden.

Magnetoinduktische Vorrichtungen zur kontaktlosen Bestimmung von versteckten Planheitsfehlern sind z.B. in den Patentschriften DE-C- 12 01 852, GB-A- 1 160 124, DE-C- 20 60 725, US-A- 826 132 und HU-A- 174 945 geoffenbart. Bei den bekannten magnetoinduktischen Vorrichtungen zur kontaktlosen Messung von versteckten Planheitsfehlern können die nachfolgenden Nachteile erwähnt werden:

a) Die bekannten Meßvorrichtungen zeigen gleichzeitig getrennt die sichtbaren und versteckten Planheitsfehler nicht an und fühlen nicht den Rand des Blechs.

b) Wenn mehrere Meßköpfe zur Bestimmung der versteckten Planheitsfehler relativ nahe zueinander angeordnet werden, bewirkt die hohe Streufeldstärke der auf dem Walzgerüst montierten Meßköpfe eine Verfälschung der Meßergebnisse bei der Bestimmung der versteckten Planheitsfehler. Dieses Problem kann im allgemeinen als ungelöst erachtet werden, und zu seiner Lösung wurde vorgeschlagen, einen Meßkopf unter dem beweglichen Blech in Querrichtung zu bewegen. Bei solcher Beseitigung eines Nachteils werden aber zwei wichtige Vorteile ausgelassen und nämlich soll ein bewegliches, und während seiner Bewegung der Einwirkung den Schütterungen des Walzgerüsts und den Verschmutzungen ausgesetztes Element angewendet werden; wegen der Bewegung des Meßkopfes ist eine kurze Mittelbildungszeit nicht erlaubt.

c) Die Eichkurve der bekannten Meßköpfe (die Abhängigkeit
ihrer elektrischen Ausgangsspannung von der mechanischen Spannung) ist im notwendigen Meßbereich nichtlinear..

d) Der durch den Abstand zwischen der Deckebene der Meßköpfe und des zu messenden Blechs, d.h. durch den Luftspalt hervorgerufene Meßfehler kann nicht in nötigem
Maße vermindert werden.

Der erfindungsgemäßen Lösung, auf den untengeschriebenen
Erkenntnissen stützend, liegt die Aufgabe zugrunde, obige
Mängel zu beheben, und derart eine höhere Genauigkeit der
Bestimmung der Planheitsfehler als bei den bekannten Methoden zu erreichen.

Der Erfindung liegen mehrere Erkenntnisse zugrunde. Zuerst
daß die erwähnten Mängel zweckmäßig durch Anwendung eines
oder mehrerer nahe zueinander angeordneten magnetoinduktischer Meßköpfe zu beseitigen sind, weil bei solcher Anordnung das Problem der gemeinsamen Interpretation der Ausgangssignale, die durch mehrere, auf verschiedenen Grundprinzipien stützend arbeitende Meßköpfe erzeugt werden,
nicht auftritt.

Eine weitere zugrunde der Erfindung liegende Erkenntnis
stellt fest, daß die Regelung der Planheit des Blechs beim
Kaltwalzen nur dann erfolgreich sein kann, wenn sowohl die
Lage des Kaltblechs in Querrichtung - die Mittellinie der
Platte soll mit der Mittellinie der Walzenstraße übereinstimmen -, als auch die sichtbaren und die versteckten Planheitsfehler gemeinsam und gleichzeitig gemessen werden und die Steuerung aufgrund der Meßergebnisse vorgenommen wird.

Eine andere Erkenntnis besteht darin, daß das Streufeld, d.h. die störende Einwirkung der benachbarten Meßköpfe das Erfassungsorgan des Meßkopfes betrifft und dies beeinflußt gar nicht das Erregungsorgan.

Eine noch weitere Erkenntnis sagt aus, daß die Nichtlinearität der Eichkurve durch die Inhomogenität der Streufeldamplitude entlang der Erfassungslinie und durch die elektrische Unausgeglichenheit des Meßkopfes, aber nicht durch die die Vergangenheit des zu messenden Blechs, d.h. den Werdegang des Blechs von der Herstellung bis zur Messung, gekennzeichnete magnetische Anisotropie hervorgerufen wird.

Schließlich wurde anerkannt, daß die zur Verminderung der durch die Abänderung des Luftspaltes hervorgerufenen Meßfehler vorgenommenen, an sich bekannten Maßnahmen nicht genügend sind, es soll daneben die Verminderung des durch die sog. asymmetrische Luftspaltabänderung bewirkten Meßfehlers gesichert werden.

Aufgrund der obigen Erkenntnisse wurden die nachfolgenden technischen Maßnahmen vorgesehen:

a) In jedem Meßkopf werden die Größen des Luftspaltes zwischen dem Meßkopf und dem Blech, die Schwingungen und der Rand der Platte durch zwei U-förmige, mit Erregerwicklung und Erfassungswicklung versehene Magnetkerne erfaßt.

b) In jeden Meßkopf werden zwei eine Erregung sichernde Magnetkerne miteinander parallel und mit bestimmtem Abstand voneinander abgetrennt angeordnet. Derart wird das homogene Magnetfeld zur magnetischen Messung der mechanischen Spannung gesichert. Das die mechanische Spannung erfassende Organ soll senkrecht zur Symmetrielinie der Erregung angeordnet werden.

c) Dank Anwendung bekannter negativer Rückkopplung können die vier Pole der im Punkt b erwähnten zwei U-förmigen Magnetkerne gemeinsam als einen ständigen Fluß sichernden Generator gezeichnet werden. Durch entsprechende parallele Schaltung der Erregerwicklungen des Flußgenerators bewirken die Ungenauigkeit der Einstellung des Blechs und ihre Gewelltheit keinen Meßfehler. Das Ausgangssignal des Erfassungsorgans der mechanischen Spannung wird durch einen Verstärker reguliert, dessen Verstärkung von den Abänderungen des Luftspaltes abhängig veränderlich ist.

d) Die Erregungsorgane der Meßköpfe werden mit Spannungen verschiedener Frequenzen gespeist. Derart filtrieren die phasenempfindlichen Verstärker der elektronischen Einheit die Einwirkung des von den benachbarten Meßköpfen stammenden störenden Streufeldes aus.

Zur Lösung der vorgenannten Aufgabe wurde ein Meßgerät zur kontaktlosen Messung des mechanischen Spannungszustandes eines ferromagnetischen Blechs geschafft, das eine im ferromagnetischen Blech in einer ersten Richtung ein wechselndes Magnetfeld erzeugende Erregungseinheit und eine die mechanische Spannung des ferromagnetischen Blechs erfassende und durch die Messung eines magnetischen Wechselfeldes wirkende Erfassungseinheit aufweist, wobei das magnetische Wechselfeld in einer zur ersten senkrechten oder beinahe senkrechten zweiten Richtung hervorgerufen ist. Das Wesen des erfindungsgemäßen Meßgeräts besteht darin, daß die Erregungseinheit einen ersten und einen zweiten Magnetkern aufweist, die zueinander parallel und spiegelsymmetrisch angeordnet, und, zur Gewährleistung eines in den Magnetkernen gleichphasigen Induktionsflusses, mit zumindest je einer Erregerwicklung versehen sind, daß die die zu messende mechanische Spannung fühlende Erfassungseinheit einen dritten Magnetkern aufweist, der senkrecht oder beinahe senkrecht zu einer zwischen den ersten und zweiten Magnetkernen verlaufenden Symmetrielinie angeordnet ist und mit zumindest einer Erfassungswicklung ausgestattet ist. Bei dieser Anordnung wir dem dritten Magnetkern, zur magnetischen Messung der mechanischem Spannung ein homogenes Magnetfeld gewährleistet.

Bei einer vorteilhaften Ausführung des erfindungsgemäßen Meßgeräts sind auf den ersten und zweiten Magnetkernen je zwei, in Reihe geschaltete Erregerwicklungen angeordnet, wobei die zwei, auf dem ersten Magnetkern angeordneten und in Reihe geschalteten Erregerwicklungen mit den zwei auf dem zweiten Magnetkern angeordneten und auch in Reihe geschalteten Erregerwicklungen parallel geschaltet sind. Derart kann der durch die schräge Lage der Platte hervorgerufene Fehler bedeutend kompensiert werden.

Die vorige Ausführung kann vorteilhaft so verwirklicht werden, daß auf den ersten und zweiten Magnetkernen je zwei, in Reihe geschaltete Rückkopplungswicklungen angeordnet sind, und ein die Erregerwicklungen speisender erster Verstärker vorhanden ist, dessen Eingang an einem Ausgang eines Differenzbilders angeschlossen ist, wobei ein Eingang des Differenzbilders zu einem Sinussignal leitenden Ausgang eines ersten Generators und sein anderer Eingang zu den Rückkopplungswicklungen zugeführt sind. Mittels dieser Anordnung kann die Unabhängigkeit des durch die Erregungseinheit hervorgerufenen Induktionsflusses von der Größe des Luftspaltes gesichert werden.

Das erfindungsgemäße Meßgerät wird weiters vorteilhaft so aufgebaut, daß zumindest eine der Erfassungswicklungen der die mechanische Spannung fühlenden Einheit durch einen zweiten Verstärker regelbarer Verstärkung zu einem Eingang eines phasenempfindlichen dritten Verstärkers zugeführt ist, daß ein Steuereingang des zweiten Verstärkers an einem Ausgang eine ein zur Veränderung des Ausgangssignals des ersten Verstärkers proportionelles Signal leistenden Einheit angeschlossen ist, und ein Referenzeingang des dritten Verstärkers einem Rechtsecksignal leistenden Ausgang des Generators zugeführt ist. Mit dieser Anordnung kann das gemessene Signal abhängig von der Abänderung des Luftspaltes kompensiert werden.

Nach einer weiteren vorteilhaften Ausführung wird ein Aufbau vorgeschlagen, wobei das Meßgerät mit einem die sichtbaren Planheitsfehler des ferromagnetischen Blechs messenden Organ ausgestattet ist, das einen vierten und fünften Magnetkern aufweist, die außerhalb des zwischen dem ersten und zweiten Magnetkernen liegenden Bereiches, zum Magnetfeld der ersten und zweiten Magnetkerne symmetrisch angeordnet

0064216

und mit zumidest je einer Erregerwicklung sowie mit zumindest je einer Erfassungswicklung versehen sind. Diese Anordnung ermöglicht die Messung der sichtbaren und versteckten Planheitsfehler.

Ein weiterer vorteilhafter Aufbau der vorigen Ausführung des erfindungsgemäßen Meßgeräts kann erreicht werden, wenn die zu den vierten und fünften Magnetkernen gehörenden Erregerwicklungen in solcher Weise miteinander in Reihe verbunden sind, daß in den vierten und fünften Magnetkernen gegenseitige Phasen aufweisende Induktionsflüsse hervorgerufen werden, und wenn die Erfassungswicklungen in solcher Weise miteinander in Reihe verbunden sind, daß bei den zueinander gegensinnige Phasen aufweisenden Induktionsflüssen die in den Erfassungswicklungen induzierten Spannungssignale addiert werden. Bei dieser Anordnung wird erreicht, daß sich die Spannungen, die durch das Streufeld der Erregerwicklungen der ersten und zweiten Magnetkerne in den Erfassungswicklungen der vierten und fünften Magnetkerne induziert sind, ausgleichen. Es ist zweckmäßig, wenn der vierte und der fünfte Magnetkern parallel oder beinahe parallel zu den ersten und zweiten Magnetkernen angeordnet ist.

Bei einer noch anderen vorteilhaften Ausführung des erfindungsgemäßen Meßgeräts sind die Magnetkerne U-förmig ausgebildet, wobei ihre Pole in einer Ebene angeordnet sind und sowohl die Erfassungs-, als auch die Rückkopplungs- und Erregerwicklungen auf den zwei Zweigen der Magnetkerne gleichmäßig verteilt angeordnet sind. Es kann auch zweckmäßig sein, wenn die Magnetkerne solche geometrische Form und Anordnung aufweisen, bei der d2/d1 = 0,4 bis 0,5; d3/d1 = 0,5 bis 0,6; d4/d1 = 0,3 bis 0,5 und d5/d1 = 1,5 bis 1,7, wobei d1 der Abstand zwischen den Polen des ersten Magnetkerns ist, der mit dem Abstand zwischen den Polen des zweiten Magnetkerns gleich ist, d2 der Abstand zwischen den Polen des dritten Magnetkerns, d3 der Abstand zwischen den ersten und zweiten Magnetkernen, d4 der Abstand zwischen den Polen des vierten Magnetkerns und d5 der Abstand zwischen den vierten und fünften Magnetkernen ist, wobei d4 mit dem Abstand zwischen den Polen des fünften Magnetkerns gleich ist.

Es bewies sich vorteilhaft zu sein, wenn die Erregerwicklungen des ersten und zweiten Magnetkerns an einen ersten Generator erster Frequenz, und die Erregerwicklungen des vierten und fünften Magnetkerns an einen zweiten Generator angeschlossen sind, wobei die Frequenz des zweiten Generators zumindest doppelt so hoch ist, als die erste Frequenz. Bei solcher Anordnung kann die unerwünschte Einwirkung der Streufelde noch weiter vermindert werden.

Aufgrund der angegebenen Erkenntnisse wurde auch eine Meßvorrichtung zur kontaktlosen Messung des mechanischen Spannungszustandes, gegebenenfalls der sichtbarer Planheitsfehler eines ferromagnetischen Blechs bearbeitet, die zumindest zwei entlang der Länge des ferromagnetischen Blechs angeordnete Meßgeräte aufweist, wobei jedes Meßgerät mit einer im ferromagnetischen Blech in einer erster Richtung ein wechselndes Magnetfeld erzeugenden Erregungseinheit und mit einer die mechanische Spannung des zu messenden ferromagnetischen Blechs erfassenden und durch Messung eines magnetischen Wechselfeldes wirkenden Erfassungseinheit ausgestattet ist, wobei das magnetische Wechselfeld in einer zur ersten senkrechten oder beinahe senkrechten zweiten Richtung hervorgerufen ist, und erfindungsgemäß die Erregungseinheiten der nebeneinander angeordneten Meßgeräte auf ersten Generatoren von verschiedenen Frequenzen geschaltet sind. Dadurch ist es möglich, die Meßköpfe der Meßgeräte ganz nahe zueinander auf dem Walzgerüst anzuordnen, weil die Erregungsorgane der benachbarten Meßgeräte wegen der Arbeit mit verschiedenen Frequenzen sich einander nicht stören.

Bei einer vorteilhaften Ausführung der erfindungsgemäßen Meßvorrichtung sind die mechanische Spannung fühlenden Erfassungseinheiten der Meßgeräte mit phasenempfindlichen dritten Verstärkern verbunden, deren Ausgänge mit einer die entlang der Breite des ferromagnetischen Blechs vorhandene Spannungsverteilung zeigenden ersten graphischen Anzeigeeinheit verbunden sind. Es ist auch zweckmäßig, wenn zumindest ein Teil der Meßgeräte mit einem die sichtbaren Planheitsfehler des ferromagnetischen Blechs messenden Organ ausgestattet ist, wobei jedes Organ mit einem entsprechenden phasenempfindlichen vierten Verstärker verbunden ist, und die Ausgänge der phasenempfindlichen vierten Verstärker mit einer die entlang der Breite des ferromagnetischen Blechs vorhandene Spannungsverteilung zeigenden zweiten graphischen Anzeigeeinheit gekoppelt sind. Die vorgeschlagenen Lösungen ermöglichen es, die kontinuierliche Kontrolle sowohl der versteckten Planheitsfehler (der mechanischen Eigenspannung), als auch der sichtbaren Planheitsfehler während des Kaltwalzens durchzuführen.

Die erfindungsgemäße Meßvorrichtung kann auch sehr vorteilhaft derart ausgebildet werden, daß die Ausgänge der an den die sichtbaren Planheitsfehler des ferromagnetischen Blechs messenden Organe angeschlossenen phasenempfindlichen vierten Verstärker mit den Eingängen einer die Breite des ferromagnetischen Blechs erfassenden logischen Einheit verbunden sind, wobei der Ausgang der logischen Einheit zu einem Steuereingang einer, die Meßgeräte gemäß der aktuellen Breite des ferromagnetischen Blechs in die Meßvorrichtung einschaltenden und daraus ausschaltenden Schalteinheit zugeschaltet sind. Diese Lösung sichert die Möglichkeit, bei veränderlicher Breite des ferromagnetischen Blechs immer die Meßgeräte in notwendiger Anzahl und in erwünschter Konfiguration einzuschalten, und die Meßarbeit automatisch zu führen.

Der Gegenstand der Erfindung wird weiters anhand von beispielsweise dargestellten Ausführungen, mit Hinweis auf die beiliegende Zeichnung näher erläutert. Es zeigen

Fig. 1   die Anordnung einer auf dem Walzgerüst, bei dem zu prüfenden Blech angeordneten erfindungsgemäßen Meßvorrichtung,

Fig. 2   das Koordinatensystem der Meßköpfe der in Fig. 1 dargestellten Anordnung,

Fig. 3   die Anordnung der Magnetkerne eines Meßgeräts in Draufsicht,

Fig. 4   die axonometrische Darstellung der in Fig. 3 sichtbaren Anordnung der Magnetkerne,

Fig. 5   das Wicklungssystem eines die sichtbaren Planheits-

- 14 -                                    0064216

fehler messenden und den Rand fühlenden Organs eines Meßkopfes,

Fig. 6 die Einschaltung des Wicklungssystems nach Fig. 5,

Fig. 7 wie Fig. 6,

Fig. 8 das Wicklungssystem einer Erregungseinheit des Meßkopfes,

Fig. 9 die Zuschaltung des Wicklungssystems der Erregungseinheit und des die elastische mechanische Spannung fühlenden Organs eines Meßkopfes zu einer elektronischen Meßeinheit und eine vorteilhafte Ausführung der Meßeinheit,

Fig. 10 das Blockschema der elektrischen Schaltungsanordnung einer vorteilhaften Ausführung der erfindungsgemäßen Meßvorrichtung,

Fig. 11 die Anordnung eines erfindungsgemäßen Meßgeräts bei einer breites Blech vorbereitenden Walzstraße, und

Fig. 12 eine Meßbrücke in erfindungsgemäßen Anordnung bei einer enges Blech vorbereitenden Walzstraße.

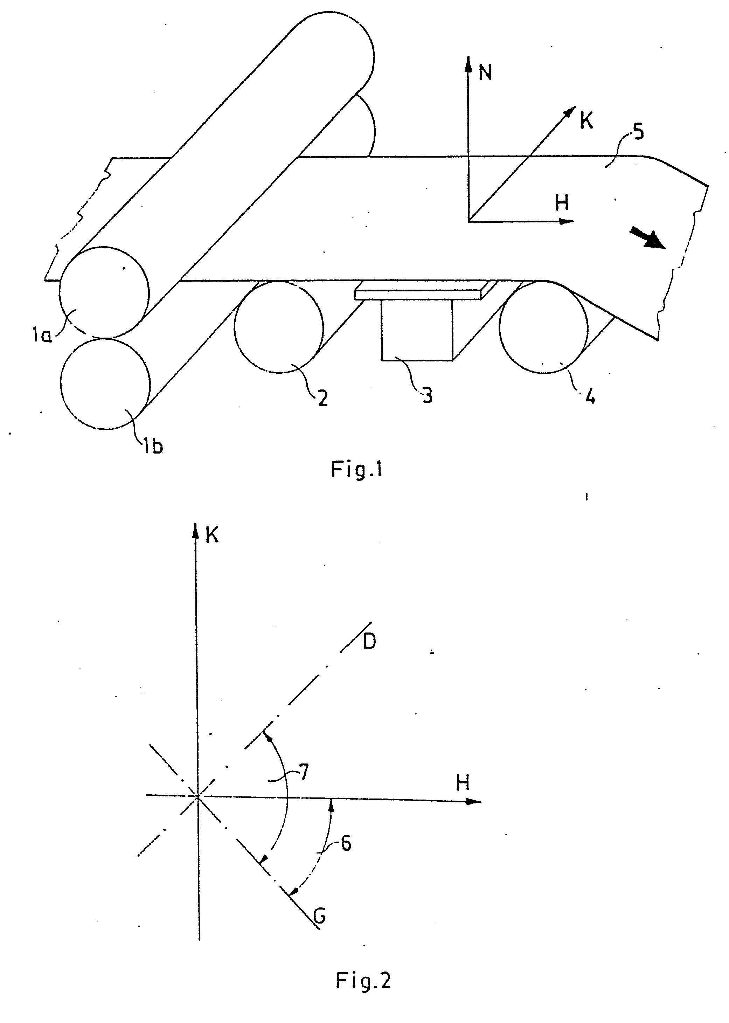

In Fig. 1 ist die Anordnung der erfindungsgemäßen Meßvorrichtung an einem Walzgerüst, mit der Darstellung des zur Veranschaulichung angewendeten Koordinatensystems sichtbar.

Koordinate H stimmt mit der Längsrichtung des Walzens, Koordinate K mit der Querrichtung und Koordinate N mit der normalen Richtung zum Walzen überein. In der Ebene (H, K) bewegt sich ein ferromagnetisches Blech 5 zwischen Arbeitswalzen 1a und 1b in Richtung der Koordinate H, wobei die normale Richtung (Koordinate N) zur Oberfläche des ferromagnetischen Blechs senkrecht verläuft. Die erfindungsgemäße Meßvorrichtung ist in dem Walzgerüst der Walzstraße, auf einer zwischen Führungsrollen 2 und 4 angeordneten Hälterbrücke 3 aufgestellt.

Nach Fig. 2 werden in der durch die Koordinaten K und H bestimmten Ebene zwei Linien, durch D und G gezeichnet, aufgenommen. Die Linie G und die Koordinate H bestimmen einen Winkel 6, dessen Wert 45° ausmacht. Zwischen den Linien D und H ist ein Winkel 7 vorhanden, dessen Wert an 90° beträgt. Die angegebenen Werte sollen mit der Genauigkeit etwa $\pm 10°$ eingehalten werden.

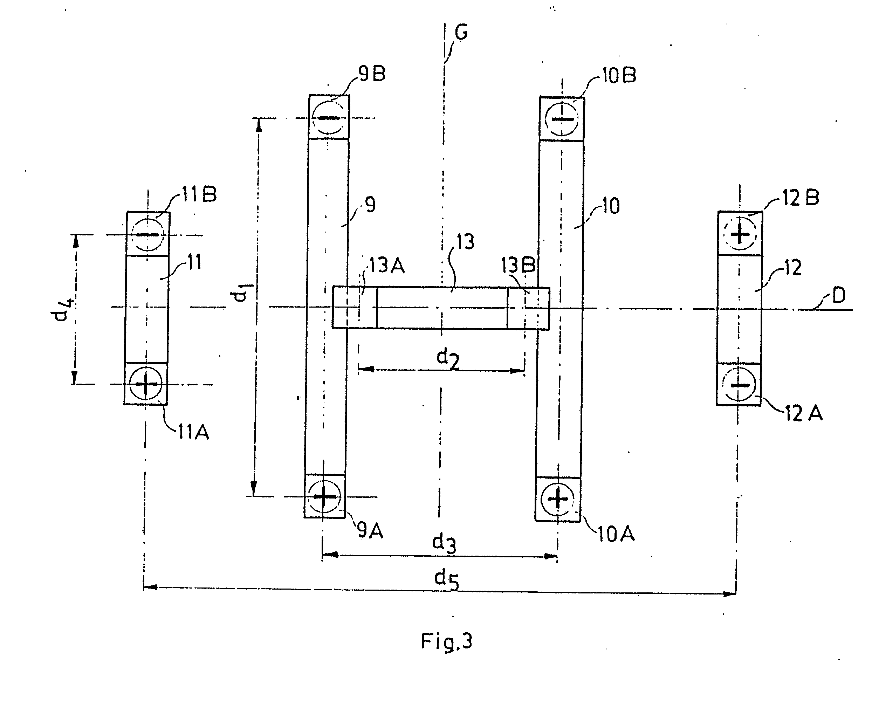

Wie es in Draufsicht in Fig. 3 sichtbar ist, wird das erfindungsgemäße Meßgerät mit Magnetkernen 9, 10, 11, 12 und 13 versehen, wobei die Magnetkerne 9, 10, 11, 12 und 13 U-förmig ausgebildet und sowohl zur Linie D als auch zur Linie G spiegelsymmetrisch angeordnet sind. Die Magnetkerne 9, 10, 11 und 12 weisen entsprechende Pole 9A, 9B; 10A, 10B:, 11A, 11B; 12A und 12B auf, die paarweise in zur Linie G parallelen Linien liegen. Der Magnetkern 13 weist Pole 13A und 13B auf, die in einer zur Linie D parallelen Linie liegen. Die Magnetkerne 9 und 10 bilden eine Erregungseinheit 60 des Meßgeräts, der Magnetkern 13 bildet eine zur Erfassung der elastischen mechanischen Spannung zur Messung der versteckten Planheitsfehler vorgesehene Erfassungseinheit 61, und die Magnetkerne 11 und 12 bilden ein Organ 62 des erfindungsgemäßen Meßgeräts, welches zur Messung der sichtbaren Planheitsfehler und zur Erfassung des Randes der Platte dient. Die Magnetkerne 9, 10, 11, 12 und 13 sind, wie unten beschrieben ist, mit Wicklungen versehen.

Die Abstände zwischen den Polen der vorteilig U-förmigen Magnetkerne sind folgendermaßen bezeichnet: dl ist der Abstand zwischen den Polen 9A und 9B sowie 10A und 10B, d2 ist der Abstand zwischen den Polen 13A und 13B, d3 ist der Abstand zwischen den Magnetkernen 9 und 10, d4 ist der Abstand zwischen den Polen 11A und 11B, bzw. 12A und 12B und schließlich, ist d5 der Abstand zwischen den Magnetkernen 11 und 12. Zwischen den erwähnten Abständen sind vorteilig die folgenden Verhältnisse zu sichern: d2/dl = 0,4 bis 0,5; d3/dl = 0,5 bis 0,6; d4/dl = 0,3 bis 0,5; d5/dl = 1,5 bis 1,7. In Fig. 3 sind die relativen Phasenlagen des bei den Polen austretenden wechselnden Induktionsflusses durch Zeichen + und - gezeichnet.

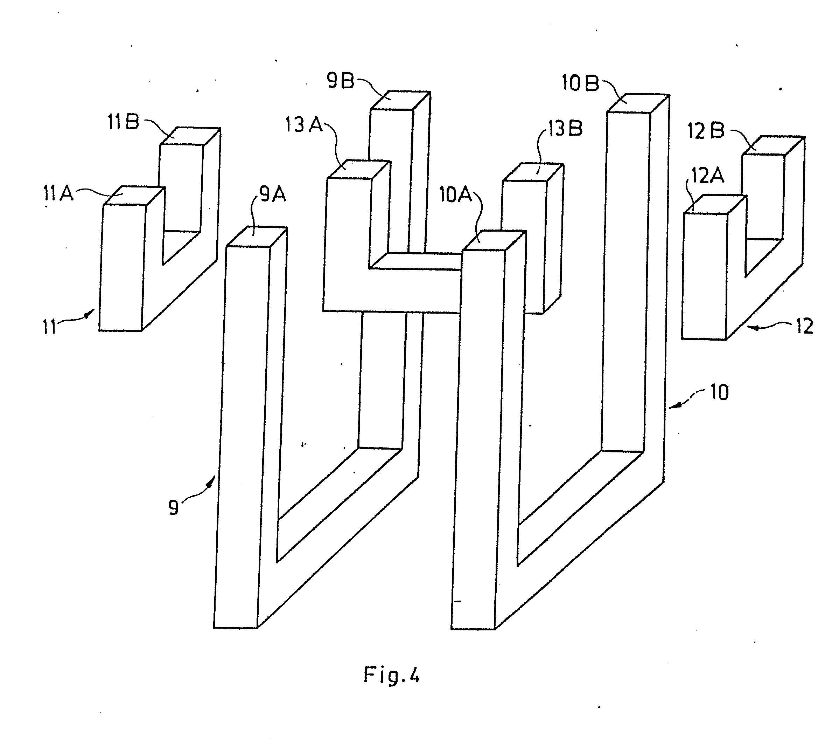

In Fig. 4 ist die Anordnung der Magnetkerne 9, 10, 11, 12 und 13 in axonometrischer Darstellung sichtbar. Die Pole der Magnetkerne 9, 10, 11, 12 und 13 liegen in einer Ebene.

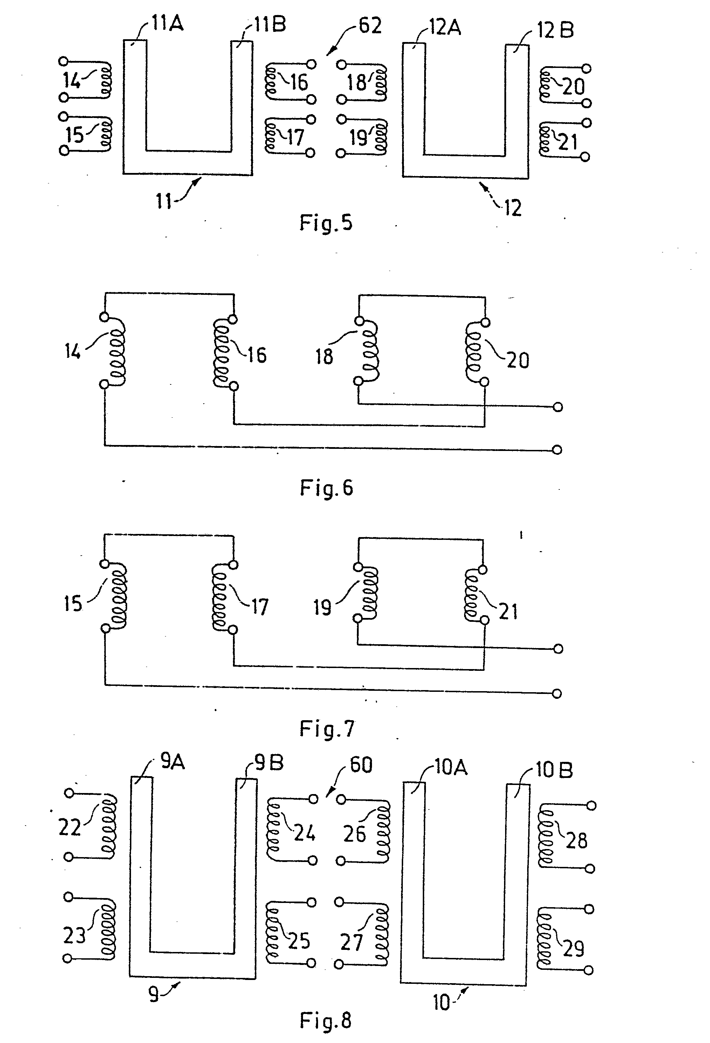

Die Wicklungsanordnung auf den Magnetkernen ist in den Fig. 5, 6 und 7 für das Organ 62 dargestellt, das zur Messung der sichtbaren Planheitsfehler und zur Erfassung des Randes des ferromagnetischen Blechs vorgesehen ist. Bei diesem Organ sind Erregerwicklungen 15, 17, 19, 21 und Erfassungswicklungen 14, 16, 18 und 20 vorhanden. Die Erregerwicklungen 15, 17, 19 und 21 sind in Reihe geschaltet, und nämlich so, daß die bei den Polen 11A, 11B, 12A, 12B austretenden Induktionsflüsse den Zeichen der Fig. 3 entsprechen, d. h. daß die Magnetkerne 11 und 12 Erregungen zueinander gegenseitiger Phasen erhalten. Die Frequenz des Erregerstroms beträgt vorteilig 1,5 bis 10 kHz, z. B. 2,3 kHz, weil in diesem Bereich das Signal des Organs 62 von der Dicke des Blechs beinahe unabhängig ist. Die Erfassungswicklungen 14, 16, 18 und 20 sind auch in Reihe geschaltet, und derart wird erreicht, daß die in den Magnetkernen 11 und 12 durch die Induktionsflüsse induzierten Spannungen addiert werden. Hinsichtlich der Magnetkerne 11 und 12 sind die durch die Magnetkerne 9 und 10 induzierten Induktionsflüsse in gleicher Phase und darum werden die von ihnen in den Erfassungswicklungen 14, 16, 18 und 20 induzierten Spannungen auseinander ausgezogen. Diese Lösung ermöglicht, die Übersteuerung der Eingangsstufe des mit den Erfassungswicklungen 14, 16, 18 und 20 gekoppelten phasenempfindlichen Verstärkers zu vermeiden.

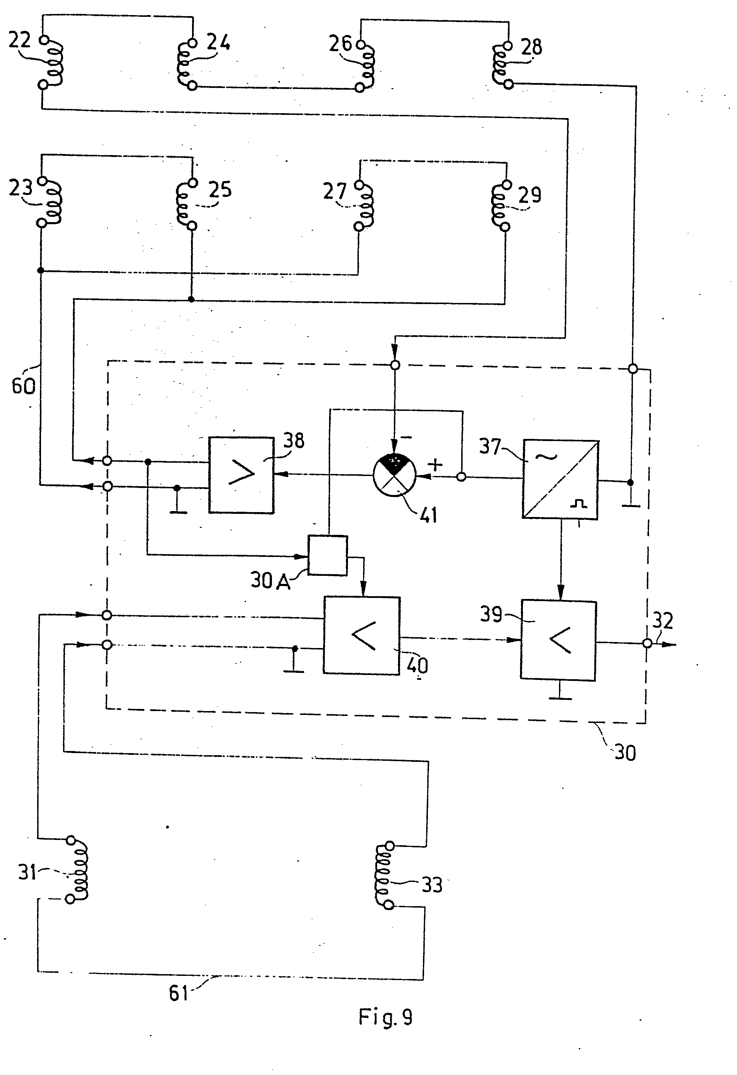

In Fig. 8 ist die Anordnung der Wicklungen in der Erregungseinheit 60 des erfindungsgemäßen Meßgeräts sichtbar. Die Erregungseinheit ist mit Erregerwicklungen 23, 25, 27, 29 und Rückkopplungswicklungen 22, 24, 26 und 28 versehen. In Fig. 9 wurde dargestellt, daß die Erregerwicklungen 23, 25 und 27, 29 miteinander in Reihe geschaltet sind und die in Reihe geschalteten Wicklungen werden paarweise parallel zu einer elektronischen Meßeinheit 30 zugeführt, die durch die Rückkopplungswicklungen 22, 24, 26 und 28 bei einer vorteilig im Bereich 100 bis 400 Hz liegenden Frequenz in einer negativen Rückkopplung arbeitet. Die Induktionsflüsse verlassen die Pole 9A, 9B, 10A, 10B der Magnetkerne 9 und 10 gemäß den Zeichen der Fig. 3. In Fig. 9 ist weiters das Wicklungssystem der die mechanische Spannung fühlenden Erfassungseinheit 61 sichtbar, das mit Erfassungswicklungen 31 und 33 versehen ist.

Zur Messung dient eine

die in Fig. 9 dargestellte elektronische Meßeinheit 30 (Fig. 9) die einen ersten Generator 37 zur Leistung eines Sinussignals mit bestimmter, vorteilig im Bereich 100 bis 400 Hz liegender Frequenz enthält. Das Sinussignal ist zur Steuerung, durch einen eingeschalteten Differenzbilder 41, eines als Leistungsverstärker ausgebildeten ersten Verstärkers 38 vorgesehen. Zu einem differenzbildenden Eingang des Differenzbilders 41 sind die Rückkopplungswicklungen 22, 24, 26 und 28 zugeführt. Der erste Verstärker 38 speist die Erregerwicklungen 23, 25, 27 und 29. Durch die Rückkopplung ist die Anwendung der Erregungseinheit 60 in Form eines Flußgenerators möglich. Die die mechanische Spannung fühlende Erfassungseinheit 61 ist mit ihren in Reihe geschalteten Erfassungswicklungen 31 und 33 zu einem Eingang eines zweiten Verstärkers 40 regelbarer Verstärkung zugeführt. Ein Ausgang des zweiten Verstärkers 40 ist an einem Eingang eines phasenempfindlichen dritten Verstärkers 39 angeschlossen. Der erste Generator 37 leistet ein Torsignal für den dritten Verstärker 39, wobei die Frequenz des Torsignals mit der Frequenz des am Ausgang des ersten Generators 37 sichergestellten Sinussignals gleich ist, und seine Phase kann im Vergleich mit dem Sinussignal reguliert werden. Durch die Phasenverschiebung soll einerseits die Phasenverschiebung des ganzen Meßsystems, andererseits die von dem zu prüfenden ferromagnetischen Blech abhängige Phasenverschiebung ausgeglichen werden. Die Verstärkung des zweiten Verstärkers 40 ist in Abhängigkeit von den Schwankungen der Größe des Luftspaltes zu regeln. Dazu kann das Ausgangssignal einer zur Veränderung des Luftspaltes proportionelles Signal leistenden Untereinheit 30A der elektronischen Meßeinheit 30 angewendet werden; ein Eingang des ersten Verstärkers 38, wird mit dem durch den differenzbildenden Eingang des Differenzbilders 41 weitergeleiteten Signal gespeist. Das letzte Signal ist praktisch, wegen der hohen Kreisverstärkung, mit dem auf dem differenzbildenden Eingang des Differenzbilders 41 vorhandenen, zu dem Induktionsfluß der Erregungseinheit 60 proportionellen Signal, d.h. mit dem sinusoidalen Steuersignal des ersten Generators 37 praktisch identisch. Die Untereinheit 30A sichert das Gleichrichten der zwei Eingangssignale und erzeugt ein der Differenz der gleichrichteten Signale entsprechendes Ausgangssignal, dessen Größe von der Schwankung der Größe des Luftspaltes abhängig ist. Durch einen Ausgang 32 der elektronischen Meßeinheit 30 leistet der dritte Verstärker 39 ein der durch das Meßgerät gemessenen mechanischen Spannung (den versteckten Planheitsfehlern.) entsprechendes elektrisches Signal.

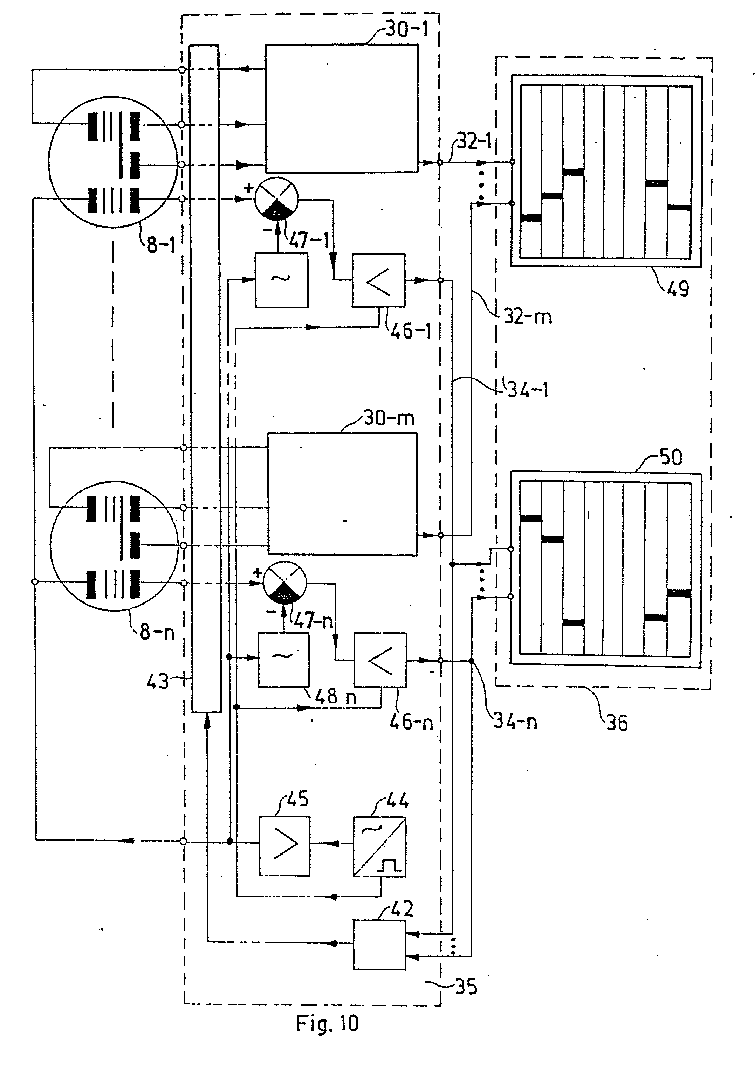

In Fig. 10 ist ein Blockschema der erfindungsgemäßen Meßvorrichtung sichtbar. Die Meßvorrichtung besteht aus dreien Hauptteilen, und zwar aus Meßköpfen 8-1 bis 8-n, aus einer elektronischen Einheit 35 und aus einer Anzeigeeinheit 36, wobei die Anzahl n der Meßköpfe eine ungerade Zahl, 3, 5, 7 usw. beträgt. Die elektronische Einheit 35 enthält Meßeinheiten 30-1 bis 30-m in einem der elektronischen Meßeinheit 30 gemäß Fig. 9 entsprechenden Aufbau, weiters einen zweiten Generator 44 höherer (im Bereich von 1,5 bis 10 kHz liegender) Frequenz, der ein Sinussignal leistet. Dieses Sinussignal wird einerseits als Torsignal bei phasenempfindlichen vierten Verstärkern 46-1 bis 46-n und andererseits als Eingangssignal bei einem als Leistungsverstärker ausgebildeten fünften Verstärker 45 angewendet. Das Signal der vierten Verstärker 46-1 bis 46-n hat die Frequenz des erwähnten Sinussignals, doch seine Phasenlage kann eingestellt werden.

Der fünfte Verstärker 45 sichert die Speisung der Erregerwicklungen 15, 17, 19 und 21 aller Meßköpfe 8-1 bis 8-n. Die Erfassungswicklungen 14, 16, 18 und 20 der Meßköpfe 8-1 bis 8-n sind an entsprechenden Differenzbildern 47-1 bis 47-n angeschlossen, worin aus den eingeleiteten Signalen entsprechende, durch Einheiten 48-1 bis 48-n hergestellten Kompensierungssignale herausgezogen werden. Die Kompensierungssignale weisen die Frequenz der Ausgangsspannung des fünften Verstärkers 45, aber eine von ihnen verschiedene Phasenlage auf. Bei der Messung der sichtbaren Planheitsfehler ist bei einem großen Luftspalt eine kleine Veränderung des Luftspaltes zu messen, daher soll ein          Kompensierungssignal aus den von den Erfassungswicklungen 14, 16, 18 und 20 hergestellten Signalen herausgezogen werden, welches z. B. dem nominalen Abstand des zu messenden Blechs entspricht. Die Phasenlage des Referenzsignals des entsprechenden vierten Verstärkers 46-1 bis 46-n soll nach dem unendlichen Blechabstand, d. h. zu unendlich breitem Luftspalt eingestellt werden. Auf diese Weise wird die Linearität der Messung erreicht. Das die Differenz vertretende Signal wird zu den entsprechenden phasenempfindlichen vierten Verstärkern 46-1 bis 46-n zugeleitet.

- 21 -

0064216

Die Anzeigeeinheit 36 stellt an einer mit m Kanälen versehenen ersten graphischen Anzeigeeinheit 49 die durch Ausgänge 32-1 bis 32-m der Meßeinheiten 30-1 bis 30-m weitergeleiteten Signale in solcher Form dar, daß ihre Verteilung für die Spannungsverteilung bei dem zu prüfenden ferromagnetischen Blech 5 charakteristisch ist. Auf ähnliche Weise wird eine zweite, mit n Kanälen versehene zweite graphische Anzeigeeinheit 50 vorgeschlagen, die zur Anzeige der durch Ausgänge 34-1 bis 34-n der vierten Verstärker 46-1 bis 46-n weitergeleiteten elektrischen Spannungssignale vorgesehen ist. Die zweite graphische Anzeigeeinheit 50 stellt ein Bild dar, das dem sichtbaren Planheitsfehler des zu prüfenden ferromagnetischen Blechs 5 entspricht.

Die Meßeinheiten 30-1 bis 30-m werden jedem aktiven Meßkopf 8-1 bis 8-n zugeordnet und sie arbeiten in m Kanälen. Die vierten Verstärker 46-1 bis 46-n, die zugehörenden Differenzbilder 47-1 bis 47-n sowie die Kompensierungssignal herstellenden Einheiten 48-1 bis 48-n sollen in einer mit der Zahl n der Meßköpfe 8-1 bis 8-n gleichen Anzahl angewendet werden. Eine später darzustellende logische Einheit 42, der zweite Generator 44 und der fünfte Generator 45 sind für alle Meßköpfe 8-1 bis 8-n gemeinsam. Die am fünften Verstärker 45 angeschlossenen Erregerwicklungen 15, 17, 19 und 21 sind bezüglich aller Meßköpfe 8-1 bis 8-n in Reihe geschaltet.

Die durch die Magnetkerne 11 und 12 gemessenen sichtbaren Planheitsfehler werden auf der zweiten graphischen Anzeigeeinheit dargestellt. Bei der beschriebenen Wicklungsschaltung wird die Minimalisierung der von dem Feld kleinerer Frequenz stammenden Streuung in den Wicklungen der Magnetkerne 11 und 12 erreicht, und derart ist das erwähnte Streufeld zur Überstreuung der phasenempfindlichen vierten Verstärker 46-1 bis 46-n nicht fähig. Die wegen sowohl der Asymmetrie der Magnetkerne 11 und 12, ihrer Erfassungswicklungen 14, 16, 18 und 20 als auch der Streuungsfehler der Wicklungen verbleibende Spannungskomponente niedrigerer Frequenz wird von dem phasenempfindlichen vierten Verstärker 46-1 bis 46-n mit hoher Steile gedämpft und derart bewirkt sie keinen Fehler bei der Messung.

Die Ausgänge 34-1 bis 34-n sind den Eingängen der logischen Einheit 42 zugeführt. Die logische Einheit steuert eine Schalteinheit 43, die zwischen den Meßköpfen und den Meßeinheiten 30-1 bis 30-m vorgesehen ist. Die Steuerung erfolgt nach Signalen, die der Breite des zu prüfenden ferromagnetischen Blechs 5 entsprechen und sie führt zur Einschaltung von m Meßköpfen 8-1 bis 8-n zu den Meßeinheiten 30-1 bis 30-m der momentanen Lage des ferromagnetischen Blechs 5 gemäß.

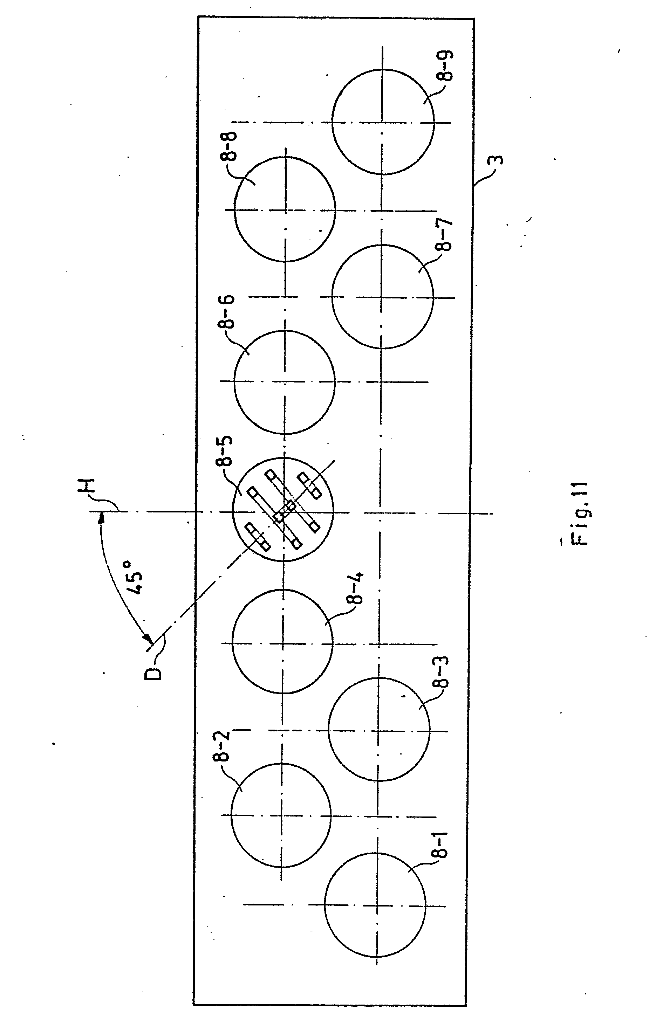

In Fig. 11 ist eine Anordnung der Meßgeräte an der Hälterbrücke 3 sichtbar. Dieser Fall betrifft das Walzen von Bändern verschiedener Breiten ( von 700 bis 1500 mm ). Bei dieser Anordnung ist die Anzahl der Meßköpfe 8-1, 8-2, 8-3, 8-4, 8-5, 8-6, 8-7, 8-8 und 8-9, d. h. neun, höher, als die Anzahl m der Kanäle der elektronischen Einheit 35. Die logische Einheit 42 wählt (Fig. 10 ) mittels entsprechender, den Rand des ferromagnetischen Blechs 5 fühlender Organe der Meßköpfe 8-1 bis 8-9 die bei gegebener Breite des ferromagnetischen Blechs 5 optimale Anordnung aus, d. h. z. B. die Meßköpfe 8-4, 8-5, 8-6; 8-3, 8-4, 8-5, 8-6, 8-7; 8-2, 8-3, 8-5, 8-7, 8-8 oder 8-1, 8-2, 8-5, 8-8 und 8-9. Die Ein- und Ausschaltung der entsprechenden Meßköpfe gehört zur Aufgabe der Schalteinheit 43, die gemäß der von der logischen Einheit 42 ethaltenen Steuerung arbeitet. Die Meßköpfe 8-1 bis 8-9 sind in einem speziellen Halter angeordnet, der z. B. aus Aluminium 3 mm Dicke vorbereitet ist.

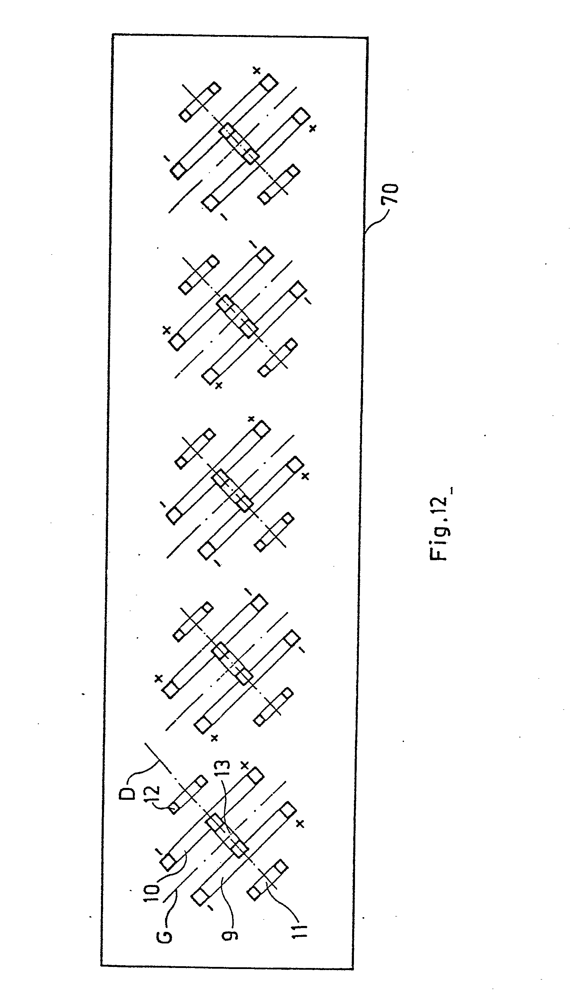

In Fig. 12 ist eine Meßbrücke 70 sichtbar, die insbesondere bei zur Verarbeitung enger Bleche (mit Breiten von 300 bis 600 mm) anwendbar ist. In diesem Falle sind nicht in getrennte Deckungen eingebaute Meßköpfe in der Hälterbrücke 3 angeordnet, sondern bildet die Meßbrücke eine organische Einheit mit den Meßeinheiten gemeinsam. Wie in Fig. 12 sichtbar, wirken die benachbarten Meßeinheiten in gegensinniger Phase, was zur Verminderung der Einwirkung des Streufeldes führt.

Die erfindungsgemäß vorgeschlagenen Maßnahmen machen sich in den dargestellten Ausführungen auf folgende Weise geltend:

a) Das die Magnetkerne 11 und 12 aufweisende und zur Messung der sichtbaren Planheitsfehler und zur Erfassung des Blechrandes vorgesehene Organ 62 signalisiert, wieviel Meßköpfe 8-1 bis 8-n durch das zu prüfende ferromagnetische Blech 5 völlig bedeckt, weiters, ob die äußeren signalisierten Meßköpfe völlig oder nur teilweise bedeckt sind.

b) Es wird durch die erwähnte Einstellung des Verhältnisses $d3/d1 = 0,5$ bis $0,6$ bei der die Magnetkerne 9 und 10 aufweisenden Erregungseinheit 60 sowie durch die erwähnte Auswahl des Verhältnisses $d2/d1 = 0,4$ bis $0,5$ bei der den Magnetkern 13 aufweisenden und zur Fühlung der elastischen mechanischen Spannung vorgesehenen Erfassungseinheit 61 erreicht, daß bei einem isotropen ferromagnetischen Band die Feldstärke entlang der Linie D eine homogene Verteilung hat, und derart, daß die Verteilung der die Anisotropie kennzeichnenden Feldstärkenkomponente entlang der Linie d konstant ist. Durch diese Lösung liegt der zu messende Anteil der Blechoberfläche in gleichem Erregungsbereich, daher ist die Eichkurve linear und kann die Messung mit gleicher Empfindlichkeit im Bereich sowohl der kleinen und mittleren als auch der hohen elastischen Spannungen vorgenommen werden.

c) Die die Magnetkerne 9 und 10 aufweisende Erregungseinheit 60 und die den Magnetkern 13 aufweisende Erfassungseinheit 61 arbeiten bei niedriger Frequenz (von 100 bis 400 Hz), doch jeder Meßkopf wird bei verschiedenen Frequenzen gespeist. Die die elastische Spannung fühlenden Erfassungseinheiten 61 der benachbarten Meßköpfe 8-1 bis 8-n arbeiten als unabhängige Einheiten, daher ist die weitere Verminderung der Einwirkung des Streufeldes, bis zu einem vernachlaßbaren Pegel möglich.

d) Die in Fig. 9 dargestellte parallele Schaltung der auf den Magnetkernen 9 und 10 vorgesehenen Erregerwicklungen 23, 25, 27, 29 sichert die Möglichkeit der Verminderung der Einwirkung der Asymmetrie des Luftspaltes bis zu einem vernachlaßbaren Pegel.

PATENTANSPRÜCHE:

1. Meßgerät zur kontaktlosen Messung des mechanischen Spannungszustandes eines ferromagnetischen Blechs, das eine im ferromagnetischen Blech (5) in einer ersten Richtung ein wechselndes Magnetfeld erzeugende Erregungseinheit (60) und eine die mechanische Spannung des ferromagnetischen Blechs erfassende und durch die Messung eines magnetischen Wechselfeldes wirkende Erfassungseinheit (61) aufweist, wobei das magnetische Wechselfeld in einer zur ersten senkrechten oder beinahe senkrechten zweiten Richtung hervorgerufen ist, dadurch gekennzeichnet, daß die Erregungseinheit (60) einen ersten und einen zweiten Magnetkern (9, 10) aufweist, die zueinander parallel und spiegelsymmetrisch angeordnet, und, zur Gewährleistung eines, in den Magnetkernen (9, 10) gleichphasigen Induktionsflusses, mit zumindest je einer Erregerwicklung (23, 25; 27, 29) versehen sind, daß die die mechanische Spannung fühlende Erfassungseinheit (61) einen dritten Magnetkern (13) aufweist, der senkrecht oder beinahe senkrecht zu einer zwischen den ersten und zweiten Magnetkernen (9, 10) verlaufenden Symmetrielinie (G) und symmetrisch zur Symmetrielinie (G) angeordnet ist, und mit zumindest einer Erfassungswicklung (31, 33) ausgestattet ist.

2. Meßgerät nach Anspruch 1, dadurch gekennzeichnet, daß auf den ersten und zweiten Magnetkernen (9, 10) je zwei, in Reihe geschaltete Erregerwicklungen (23, 25; 27 29) angeordnet sind, und die zwei, auf dem ersten Magnetkern (9) angeordneten und in Reihe geschalteten Erregerwicklungen (23, 25) mit den zwei, auf dem zweiten Magnetkern (10) angeordneten und in Reihe geschalteten Erregerwicklungen (27, 29) parallel geschaltet sind.

3. Meßgerät nach Anspruch 1 oder 2, dadurch gekennzeichnet, daß auf den ersten und zweiten Magnetkernen (9, 10) je zwei, in Reihe geschaltete Rückkopplungswicklungen (22, 24; 26, 28) angeordnet sind, daß ein die Erregerwicklungen /24, 25; 27, 29) speisender erster Verstärker (38) vorhanden ist, dessen Eingang an einem Ausgang eines Differenzbilders (41) angeschlossen ist, wobei ein Eingang des Differenzbilders (41) zu einem Sinussignal leitenden Ausgang eines ersten Generators (37) und sein anderer Eingang zu den Rückkopplungswicklungen (22, 24; 26, 28) zugeführt sind.

4. Meßgerät nach Anspruch 3, dadurch gekennzeichnet, daß zumindest eine der Erfassungswicklungen (31, 33) der die mechanische Spannung fühlenden Erfassungseinheit (61) durch einen zweiten Verstärker (40) regelbarer Verstärkung zu einem Eingang eines phasenempfindlichen dritten Verstärkers (39) zugeführt ist, daß ein Steuereingang des zweiten Verstärkers (40) an einem Ausgang einer ein zur Veränderung des Ausgangssignals des ersten Verstärkers (38) proportionelles Signal leistenden Einheit (30A) angeschlossen ist, und ein Referenzeingang des dritten Verstärkers (39) einem Rechtecksignal leistenden Ausgang des Generators (37) zugeführt ist.

5. Meßgerät nach einem der Ansprüche 1 bis 4, dadurch gekennzeichnet, daß mit einem die sichtbaren Planheitsfehler des ferromagnetischen Blechs messenden Organ (62) ausgestattet ist, das einen vierten und einen fünften Magnetkern (11, 12) aufweist, die außerhalb des zwischen dem ersten und zweiten Magnetkernen (9, 10) liegenden Bereiches, zum Magnetfeld der ersten und zweiten Magnetkerne (9, 10) symmetrisch angeordnet und mit zumindest je einer Erregerwicklung (15, 17; 19, 21) sowie mit zumindest je einer Erfassungswicklung (14, 16; 18, 20) versehen sind.

6. Meßgerät nach Anspruch 5, dadurch gekennzeichnet, daß die zu den vierten und fünften Magnetkernen (11, 12) gehörenden Erregerwicklungen (15, 17; 19, 21) in solcher Weise miteinander in Reihe verbunden sind, daß in den vierten und fünften Magnetkernen (11, 12) gegenseitige Phasen aufweisende Induktionsflüsse vorhanden sind, und die Erfassungswicklungen (14, 16; 18, 20) in solcher Weise miteinander in Reihe verbunden sind, daß bei gegensinnigen zueinander Phasen aufweisenden Induktiosflussen die in den Erfassungswicklungen (14, 15; 18, 20) induzierten Spannungssignale addiert werden.

7. Meßgerät nach Anspruch 5 oder 6, dadurch gekennzeichnet, daß der vierte und der fünfte Magnetkern (11, 12) parallel mit den ersten und zweiten Magnetkernen (9, 10) angeordnet sind.

8. Meßgerät nach Anspruch 7, dadurch gekennzeichnet, daß die Magnetkerne (9, 10, 11, 12, 13) U-förmig ausgebildet sind, ihre Pole (9A, 9B, 10A, 10B, 11A, 11B, 12A, 12B, 13A, 13B) in einer Ebene angeordnet sind und sowohl die Erfassungswicklungen (14, 16, 18, 20, 31, 33), als auch die Rückkopplungswicklungen (22, 24, 26, 28) sowie die Erregerwicklungen (15, 17, 19, 21, 24, 25, 27, 29) auf den zweien Zweigen der Magnetkerne (9, 10, 11, 12, 13) gleichmäßig verteilt vorbereitet sind.

9. Meßgerät nach Anspruch 8, dadurch gekennzeichnet, daß die Magnetkerne (9, 10, 11, 12, 13) solche geometrische Form und Anordnung aufweisen, bei der d2/d1 = 0,4 bis 0,5; d3/d1 = = 0,5 bis 0,6; d4/d1 = 0,3 bis 0,5 und d5/d1 = 1,5 bis 1,7, wobei d1 der Abstand zwischen den Polen (9A, 9B) des ersten Magnetkerns (9) ist, der mit dem Abstand zwischen den Polen (10A, 10B) des zweiten Magnetkerns (10) gleich ist, d2 der Abstand zwischen den Polen (13A, 13B) des dritten Magnetkerns (13), d3 der Abstand zwischen den ersten und zweiten Magnetkernen (9, 10), d4 der Abstand zwischen den Polen (11A, 11B) des vierten Magnetkernes (11) und d5 der Abstand zwischen den vierten und fünften Magnetkernen (11, 12) ist, wobei d4 mit dem Abstand zwischen den Polen (12A, 12B) des fünften Magnetkernes (12) gleich ist.

10. Meßgerät nach einem der Ansprüche 5 bis 9, dadurch gekennzeichnet, daß die Erregerwicklungen (23, 25; 27, 29) der ersten und zweiten Magnetkerne (9, 10) an einen ersten Generator (37) erster Frequenz, und die Erregerwicklungen (15, 17; 19, 21) der vierten und fünften Magnetkerne (11, 12) an einen zweiten Generator (44) angeschlossen sind, wobei die Frequenz des zweiten Generators zumindest doppelt so hoch ist, als die erste Frequenz.

11. Meßvorrichtung zur kontaktlosen Messung des mechanischen Spannungszustandes eines ferromagnetischen Blechs, gegebenenfalls zur Messung ihrer sichtbaren Planheitsfehler in einer Ebene, die zumindest zwei entlang der Länge des ferromagnetischen Blechs (5) angeordnete Meßgeräte aufweist, wobei jedes Meßgerät mit einer im ferromagnetischen Blech (5) in einer ersten Richtung ein wechselndes Magnetfeld erzeugenden Erregungseinheit (60) und mit einer die mechanische Spannung des fer-

romagnetischen Blechs erfassenden und durch die Messung eines magnetischen Wechselfeldes wirkenden Erfassungseinheit (61) ausgestattet ist, wobei das magnetische Wechselfeld in einer zur ersten senkrechten oder beinahe senkrechten zweiten Richtung hervorgerufen ist, dadurch gekennzeichnet, daß die Erregungseinheiten (60) der nebeneinander angeordneten Meßgeräte auf erste Generatoren (37) von verschiedenen Frequenzen zugeschaltet sind.

12. Meßvorrichtung nach Anspruch 11, dadurch gekennzeichnet, daß die mechanische Spannung fühlenden Erfassungseinheiten (61) der einzelnen Meßgeräte mit den phasenempfindlichen Verstärkern (39) der Meßgeräte gekoppelt sind, wobei die Ausgänge (32-1 bis 32-m) der dritten Verstärker mit einer die entlang der Breite des ferromagnetischen Blechs (5) vorhandenen Spannungsverteilung zeigenden ersten graphischen Anzeigeeinheit (49) verbunden sind.

13. Meßvorrichtung nach Anspruch 11 oder 12, dadurch gekennzeichnet, daß zumindest ein Teil der Meßgeräte mit einem sichtbaren Planheitsfehler des ferromagnetischen Blechs (5) messenden Organ (62) ausgestattet ist, wobei jedes Organ (62) mit einem entsprechenden phasenempfindlichen vierten Verstärker (46-1 bis 46-n) verbunden ist, und die Ausgänge (34-1 bis 34-n) der phasenempfindlichen vierten Verstärker (46-1 bis 46-n) mit einer die entlang der Breite des ferromagnetischen Blechs (5) vorhandenen mechanische Spannungsverteilung zeigenden zweiten graphischen Anzeigeeinheit (50) gekoppelt sind.

14. Meßvorrichtung nach Anspruch 13, dadurch gekennzeichnet, daß die Ausgänge (34-1 bis 34-n) der an den die sichtbaren Planheitsfehler des ferromagnetischen Blechs (5) messenden Organen angeschlossenen phasenempfindlichen vierten Verstärker (46-1 bis 46-m) mit den Eingängen einer die Breite des ferromagnetischen Blechs erfassenden logischen Einheit (42) verbunden sind, wobei der Ausgang der logischen Einheit (42)

zu einem Steuereingang einer, die Meßgeräte gemäß der aktuellen Breite des zu prüfenden ferromagnetischen Blechs (5) in die Meßvorrichtung einschaltenden und daraus ausschaltenden Schalteinheit (43) zugeschaltet sind.

Fig.1

Fig.2

Fig.3

Fig.4

0064216

Fig.5

Fig.6

Fig.7

Fig.8

Fig. 9

0064216

Fig. 10

0064216

Fig.11

0064216

Fig.12